# EUROPÄISCHE PATENTSCHRIFT

(11) **EP 1 593 695 B1**
(45) Veröffentlichungstag und Bekanntmachung des Hinweises auf die Patenterteilung: **02.07.2008**
(21) Anmeldenummer: 04010621.3
(22) Anmeldetag: 05.05.2004
(51) Int. Cl.: C08F 2/01, C08F 2/20

(54) **Verfahren zur Herstellung von Polymeren und Copolymeren**
Process for producing polymers and copolymers
Procédé de préparation de polymères et copolymères

(43) Veröffentlichungstag der Anmeldung: 09.11.2005
(73) Patentinhaber: VESTOLIT GmbH & Co. KG, 45764 Marl (DE)
(72) Erfinder: Bordeianu, Radu, Dr., 45772 Marl (DE); Gehrke, Jan-Stephan, Dr., 45768 Marl (DE)
(74) Vertreter: Polypatent

(56) Entgegenhaltungen:
- WO-A-01/32613
- WO-A-97/27229
- GB-A- 1 484 675
- US-A- 4 359 427
- US-A- 5 980 801

## Beschreibung

Die vorliegende Erfindung bezieht sich auf ein Verfahren zur Polymerisation von Monomeren in wässriger Suspension mit Hilfe eines Polymerisationsinitiators, der als feinteilige wässrige Emulsion in einem Eintopfverfahren ("on site") unmittelbar vor der Polymerisation hergestellt wird, wobei der Emulsion eine hochsiedende, für die Polymerisation inerte, und mit dem Polymer verträgliche organische Verbindung (ein Träger) zugesetzt ist, sowie auf eine Zusammensetzung, die nach diesem Verfahren hergestellt ist und auf die Verwendung einer solchen Zusammensetzung.

Als Initiatoren bei der radikalischen Polymerisation in Suspension, Emulsion oder Masse werden aus Produktivitätsgründen zunehmend aktivere Radikalbildner eingesetzt. Allerdings sind solche Verbindungen, hauptsächlich Peroxydicarbonate oder Perester, thermisch sehr empfindlich und im Reinzustand ist ihr Transport bzw. ihre Lagerung aus Sicherheitsgründen sehr problematisch. Als Lösung in organischen Lösungsmitteln oder als wässrige Emulsion wird die Handhabung solcher Initiatoren erheblich sicherer, ein Aktivitätsverlust während der Lagerung ist jedoch unvermeidlich.

Um diesen Nachteil zu beheben wurden Verfahren entwickelt, die Initiatoren unmittelbar vor dem Polymerisationsprozess im Polymerisationskessel selbst ("in situ") oder in einem separaten Reaktor ("on site") herzustellen.

Nachteile des "in situ"-Prozesses sind:
- Produktivitätsverluste, dadurch verursacht, dass während der Initiatorsynthese der Polymerisationsreaktor für die Polymererzeugung nicht verfügbar ist
- eine Heißstartfahrweise (Hot Charge Process), bei der alle Ausgangsstoffe gleichzeitig eingesetzt werden, ist nicht möglich
- verstärkte Stippenbildung
- eine Reaktionssteuerung über Initiatordosierung während der Polymerisation ist nicht möglich

Bei dem sogenannten "on site"-Verfahren werden die Initiatorsynthese und die Polymerisation räumlich voneinander getrennt und dadurch die oben angeführten Nachteile zum Teil umgangen. In der Patentliteratur ist eine Vielzahl solcher Verfahren beschrieben. Prinzipiell handelt es sich dabei um die Synthese von Alkylperoxydicarbonaten, Perestern oder Acylperoxiden in wässriger Phase.

Die meisten bekannten "on site" Verfahren werden zweistufig durchgeführt. In der ersten Stufe erfolgt die Peroxidsynthese, in der zweiten Phase die Extraktion des Peroxids mit Hilfe eines organischen Lösemittels. Die DE 2455416 beschreibt z.B. eine Reaktion von Alkylchloroformiaten, Acylchloriden, oder Anhydriden mit Wasserstoffperoxid im alkalischen oder sauren Medium in Gegenwart eines Lösungsmittels und den Einsatz der Initiatorlösung für die Polymerisation.

Des weiteren werden zur Steigerung der Effizienz der Extraktion oftmals wasserlösliche Salze hinzugegeben (Aussalzen). Zur Extraktion können, wie z.B. in der GB 1484675, entweder leicht flüchtige Lösungsmittel wie Hexan, Petrolether oder niedrige Chlorkohlenwasserstoffe verwendet werden, oder hoch siedende Komponenten, wie z.B. in der WO 97/27229 beschrieben.

Im ersten Fall wird das Extraktionsmittel zusammen mit dem Restmonomer aus dem System entfernt, und anschließend von dem Monomer in der Monomerrückgewinnungsanlage aufwendig destillativ getrennt.

Im zweiten Fall verbleibt das Extraktionsmittel im Polymer. Dabei ist sicher zu stellen, dass das Extraktionsmittel mit dem Polymer verträglich ist und dessen Eigenschaften bei der verwendeten Konzentration nicht negativ beeinflusst.

Sicherheitstechnische Aspekte sind bei der "on site" Initiatorsynthese von zentraler Bedeutung. Bei den Extraktionsverfahren versucht man die Extraktionsmittelmenge zu minimieren, um die Belastung der Monomerrückgewinnungsanlage zu reduzieren (Einsatz leicht flüchtiger Lösungsmittel), bzw. die Menge an polymerfremden Additiven zu verringern, um so die Polymereigenschaften nicht zu beeinträchtigen (Einsatz hoch siedender Extraktionsmittel).

Um diesen Anforderungen nachzukommen ist man gezwungen relativ hoch konzentrierte Initiatorlösungen einzusetzen. Emulsionen mit Aktivsauerstoffgehalten von 0,9% bis zu 4% sind kommerziell erhältlich. Der Umgang mit konzentrierten Initiatorlösungen unterliegt aber aufgrund des damit verbundenen Gefahrenpotentials besonderen gesetzlichen Vorschriften. In Deutschland gelten solche Auflagen laut BGV B4 vom 1. Oktober 1993 schon ab einem Aktivsauerstoffgehalt von 0,5 Gew.-% in der Lösung / Emulsion.

Es ist bekannt, dass zur Erfüllung der sicherheitstechnischen Aspekte der Einsatz von Initiatoremulsionen mit niedrigen Aktivsauerstoffgehalten geeignet ist.
Beim Einsatz von Initiatoremulsionen ist die gleichmäßige Verteilung des Initiators auf die Monomertröpfchen von entscheidender Bedeutung. Die Initiatorverteilung zwischen den VC-Tröpfchen beeinflusst die Qualität und Homogenität des Polymers. Überinitierte Monomertröpfchen führen zu Stippen im Polymerisat und zur Verschlechterung der Farbe sowie der Thermostabilität. Darüber hinaus ist eine inhomogene Initiatorverteilung mit einer Verbreiterung der Korngrößenverteilung des Polymers verbunden.

Die Erfindung WO 0132613 beschreibt die Synthese und den Einsatz von wässrigen Peroxydicarbonatemulsionen für die Polymerisation von Vinylverbindungen.
Dabei ist es allerdings nötig, durch Reaktion eines anorganischen Peroxids mit einem Alkalimetallhydroxide in einem ersten Reaktor, zuerst ein Alkalimetallperoxid herzustellen. Anschließend wird in einem zweiten Reaktor ein Alkylhaloformiat mit einem Dispergiermittel unter Kühlung vorgelegt und der Inhalt des ersten Reaktors, unter Kühlung und Homogenisierung in den zweiten Reaktor überführt. Man erhält eine wässrige Peroxydicarbonatemulsion zu deren Herstellung kein inerter organischer Träger verwendet wird.

Das dort beschriebene Verfahren, bei dem die Initiatorsynthese in zwei getrennten Reaktoren stattfindet, hat den allgemeinen Nachteil hoher Investitionskosten und eines erhöhten technischen Wartungsaufwandes. Darüber hinaus sind Verfahren bei denen kein organischer Träger eingesetzt wird durch eine hohe Initiatorkonzentration in den Tröpfchen gekennzeichnet. Eine gleichmäßige Verteilung des Initiators zwischen den Monomertröpfchen bei der Suspensionspolymerisation kann daher nur durch extrem feinteilige Initiatoremulsionen erzielt werden. Bei großen Initiatortröpfchen ist die Wahrscheinlichkeit hoch, dass lokale Schwankungen in der Anzahl der von den Monomertröpfchen aufgenommenen Initiatorteilchen, zu großen Konzentrationsunterschieden in den einzelnen Monomertröpfchen führen. Allerdings ist die Feinheit der durch mechanische Dispergierung hergestellten Emulsion physikalisch limitiert.

Der vorliegenden Erfindung liegt die Aufgabe zugrunde, ein Initiatorsystem für die Polymerisation durch ein wirtschaftliches Verfahren bereitzustellen, das eine optimale Verteilung des Initiators auf die Monomertröpfchen gewährleistet und zugleich den oben beschriebenen Anforderungen nach Sicherheit genügt.

Diese Aufgabe wird erfindungsgemäß gelöst durch ein Verfahren zur Polymerisation oder Copolymerisation von Monomeren in wässriger Suspension oder Mikrosuspension mit Hilfe eines Polymerisationsinitiators, dadurch gekennzeichnet, dass der Initiator als feinteilige wässrige Emulsion des Initiators unmittelbar vor der Polymerisation in einem Eintopfverfahren ("on site") hergestellt wird, wobei der Initiatoremulsion eine hochsiedende, für die Polymerisation inerte, und mit dem Polymer verträgliche organischen Verbindung (ein Träger) zugesetzt ist.

In diesem Verfahren wird in einem Eintopfverfahren ("on site") eine feinteilige wässrige Emulsion des Initiators, gelöst in einer hochsiedenden, für die Polymerisation inerten und mit dem Polymer verträglichen organischen Verbindung (einem Träger), unmittelbar vor der Polymerisation in einem Eintopfverfahren in einem dem Polymerisationskessel vorgeschalteten einzelnen Reaktor hergestellt.

Das Eintopfverfahren bietet gegenüber dem oben genannten Zweitopfverfahren der WO01/32613den Vorteil geringerer Investitionen und Instandhaltungskosten bzw. -aufwands.

Der Einsatz eines wasserunlöslichen Trägers in der wässrigen Initiatoremulsion bewirkt eine Verdünnung des Initiators in der organischen Phase und führt bei der anschließenden Polymerisation zu einer gleichmäßigeren Verteilung des Peroxids auf die Monomertröpchen. Diese gleichmäßige Verteilung des Initiators in den Monomertröpfchen ist der entscheidende Faktor zur Vermeidung überinitiierter Monomertröpfchen und der hierdurch induzierten Stippen.

Bei der Vinylchloridpolymerisation zum Beispiel haben unsere Untersuchungen gezeigt, dass beim Einsatz der erfindungsgemäßen Initiatoremulsionen, die zudem eine enge Tröpfchengrößenverteilung mit einem mittleren volumenbezogenen Durchmesser von ≤ 20 µm, bevorzugt ≤ 10, besonders bevorzugt ≤ 5 µm aufweisen, diesen Vorteil optimal nutzt. Damit hergestellte PVC-Pulver weisen im Leuchs-Tests (Leuchs O., Kunststoffe 50 (1960) 227-234.) eine niedrige Stippigkeit bei sehr engen Korngrößenverteilungen auf.

Beim Einsatz von Initiatoremulsionen, die keinen organischen Träger enthalten und/oder einen mittleren volumenbezogenen Tröpfchendurchmesser von > 20 µm aufweisen, werden für die erhaltenen PVC-Pulver sehr breite Korngrößenverteilungen mit hohen Werten für den Siebrückstand bei 200 µm erhalten. Die PVC-Proben zeigen außerdem im Leuchs-Tests eine relativ hohe Stippigkeit.

Der für die Polymerisation eingesetzte Initiator liegt erfindungsgemäß in Form einer wässrigen Emulsion vor, die einen niedrigen Aktivsauerstoffgehalt (< 0.5 Gew.-%) aufweist und somit nicht unter die Auflagen laut BGV B4 vom 1. Oktober 1993 fällt.

Das vorliegende Verfahren ist dadurch gekennzeichnet, dass die Initiatorsynthese in einem Eintopfverfahren (geringer Investitionsbedarf) in wässriger Emulsion erfolgt, der gebildete Initiator in einem wasserunlöslichen Träger aufgenommen und das gesamte Reaktionsgemisch, bevorzugt in Anwesenheit eines Emulgators oder sterischen Stabilisators, mechanisch dispergiert wird. Die resultierende Initiatoremulsion weist eine Aktivsauerstoffkonzentration von <0.5 Gew.-% bei einer Tröpfchengrößenverteilung mit einem mittleren volumenbezogenen Durchmesser von jedenfalls ≤ 20 µm, besonders bevorzugt ≤ 5 µm auf, und kann direkt in die Polymerisation eingesetzt werden.

Der in diesem Verfahren eingesetzte Träger ist eine wasserunlösliche organische Verbindung, vorzugsweise ein Diester eines C₄ - C₁₂-Alkanols mit einer Dicarbonsäure z.B Dioctyladipat, Di(2-Ethylhexyl)phthalat, Dioctylphthalat, Diisononylphthlatat, ein Ester eines C₄ - C₁₂-Alkanols mit einer Monocarbonsäure z. B. Isononylbenzoat, oder ein Mineralöl z.B. Paraffinöl.

Der nach diesem Verfahren hergestellte Initiator kann jede Peroxyverbindung sein, von dem der Fachwelt bekannt ist, dass er für die radikalische Polymerisation einsetzbar ist. Bevorzugt ist es ein Alkylperoxydicarbonat, dessen Alkylreste 2 bis 20 C-Atome enthält z.B. Diethylperoxydicarbonat, Di-(2-Ethylhexyl)peroxydicarbonat, Dicetylperoxydicarbonat, Dimyristylperoxydicarbonat, oder ein Diacylperoxid, dessen Acylrest 4 bis 20 C-Atome enthält z.B Diisobutyrylperoxid, Dilauroylperoxid, Didecanoylperoxid, oder ein Alkyl-, Cycloalkyl-, Aryl- oder Alkylaryl-Perester z.B. Cumylperoxyneodecanoat, *t*-Butylperoxyneodecanoat, wobei der Peracylrest 4 bis 20 C-Atome enthält, oder aber ein Gemisch der genannten Peroxyverbindungen.

Die Alkylperoxydicarbonate werden durch Reaktion der entsprechenden Alkylchlorformiate mit Wasserstoffperoxid im pH-Bereich von 8-12 hergestellt. Diacylperoxide werden ebenfalls durch Umsetzung von entsprechenden Acylhalogeniden mit Wasserstoffperoxid im genannten pH-Bereich hergestellt. Perester werden durch Umsetzung eines entsprechenden Acylhalogenids mit einem Hydroperoxid im pH-Bereich 8-12 synthetisiert. Als Basen können Alkalilaugen, Ammoniak oder Erdalkalihydroxide zum Einsatz kommen. Die bevorzugte Vorgehensweise dabei ist, das Chlorformiat, Wasserstoffperoxid, Wasser und Emulgator vorzulegen und anschließend die Lauge derart zu dosieren, dass eine hinreichende Wärmeabfuhr gewährleistet wird. Die Reaktionstemperatur richtet sich nach Wärmestabilität des sich bildenden Initiators. Üblicherweise liegt die Reaktionstemperatur zwischen 0 - 15°C.

Die Initiatoremulsion kann mit anionischen, kationischen oder nichtionischen Emulgatoren stabilisiert werden.

Es kommen insbesondere ionogene Emulgatoren zum Einsatz wie z.B. Alkalimetall- bzw. Ammonium-Salze von Carbonsäuren mit 10 bis 20 Kohlenstoffatomen, wie Natriumlaurat, Natriummyristat oder Natriumpalminat.

Weiterhin eignen sich primäre und sekundäre Alkalimetall- bzw. Ammonium-Alkylsulfate, z.B. Natrium-laurylsulfat, Natrium-myristylsulfat und Natrium-oleylsulfat.

Als Alkali- oder Ammoniumsalz von Alkylsulfonsäuren, die als Emulgatorkomponente eingesetzt werden, kommen solche in Frage, deren Alkylreste 10 bis 20 Kohlenstoffatome, vorzugsweise 14 bis 17 Kohlenstoffatome enthalten und verzweigt oder unverzweigt sind. Es kommen beispielsweise zum Einsatz: Natrium-decylsulfonat, Natrium-dodecylsulfonat, Natrium-myristylsulfonat, Natrium-palmitylsulfonat, Natrium-stearylsulfonat, Natrium-heptadecylsulfonat.

Als Alkali- und Ammoniumsalze von Alkylsulfonsäuren, die als Emulgatorkomponente verwendet werden können, lassen sich solche heranziehen, deren Alkylkette 8 bis 18 Kohlenstoffatome, vorzugsweise 10 bis 13 Kohlenstoffatome, enthält und verzweigt oder unverzweigt ist. Als Beispiele seien genannt: Natrium-tetrapropylenbenzolsulfonat, Natriumdodecylbenzolsulfonat, Natrium-octadecylbenzolsulfonat, Natrium-octylbenzolsulfonat sowie Natrium-hexadecylbenzolsulfonat.

Als Alkali- und Ammoniumsalze von Sulfobernsteinsäureestern, die als Emulgatorkomponente Verwendung finden sollen, lassen sich solche einsetzen, deren Alkoholanteil 6 bis 14 Kohlenstoffatome, vorzugsweise 8 bis 10 Kohlenstoffatome, enthält und verzweigt oder unverzweigt ist. Es kommen beispielsweise in Frage: Natrium-dioctylsulfosuccinat, Natrium-di-2-ethylhexylsulfosuccinat, Natrium-didecylsulfosuccinat, Natrium-ditridecylsulfosuccinat.

Als nichtionische Emulgatoren können Fettalkohole mit 12 bis 20 Kohlenstoffatomen wie z.B. Cetylalkohol, Stearylalkohol oder Fettalkohol-Ethylenoxid-Propylenoxid-Additionsprodukte, oder aber Alkylphenolpolyethylenglycolether wie z.B. Nonylphenolpolyethylenglycolether verwendet werden.

Weiterhin kommen Gemische aus Emulgatoren in Betracht. Zu den genannten Emulgatoren können auch zusätzliche Hilfsstoffe beigegeben werden, z.B. Ester, wie Sorbitanmonolaurat und Carbonsäureglykolester.

Für den Einsatz in der Mikrosuspensionspolymerisation erfolgt eine Stabilisierung der Initiatoremulsion bevorzugt mit der gleichen Emulgator/Coemulgator-Kombination, die in der Polymerisation Anwendung findet.

Für den Einsatz in der Suspensionspolymerisation von Vinylchlorid wird eine sterische Stabilisierung der Initiatoremulsion bevorzugt. Als Schutzkolloide können hierfür die in der Vinylchloridpolymerisation üblichen Schutzkolloide wie z.B. teilverseifte Polyvinylacetate (Hydrolysegrad 40 bis 80 %), Celluloseether wie z.B. Methylcellulose oder Methylhydroxypropylcellulose oder Polyvinylpyrrolidon verwendet werden.

Wird in der vorliegenden Anmeldung für die Anzahl von Atomen in einer Kette ein Bereich angegeben, so ist damit jede Kette mit einer ganzen Zahl an Atomen in diesem Bereich gemeint, z.B. hier: C₄ - C₁₂ Alkanol bedeutet: ein C₄, ein C₅, ein C₆, ein C₇, ein C₈, ein C₉, ein C₁₀, ein C₁₁ oder ein C₁₂-Alkanol.

Die im Verfahren beschriebene Feindispergierung der Initiatoremulsion kann mit Hilfe jeder hierfür bekannten Methode, wie z.B. durch Einsatz eines Hochgeschwindigkeitsrührers, Hochdruckhomogenisators oder Ultraschalldispergators erfolgen. Die Dispergierung wird so durchgeführt, dass die entstehende Emulsion einen mittleren volumenbezogenen Tröpfchendurchmesser der genannten Größe erreicht. Dem Fachmann sind die genauen Bedingungen in den einzelnen Verfahren durch einfache Versuche zugänglich. Die Art des Dispergierens ist für die Erfindung unerheblich, solange damit eine erfindungsgemäße Emulsion erhalten wird.

Der besondere Vorteil des hier erfindungsgemäß beschriebenen Verfahrens gegenüber bisher bekannten Verfahren ist, dass die in einem Eintopfverfahren hergestellte wässrige Initiatoremulsion einen wasserunlöslichen Träger enthält und man dadurch beim Einsatz dieser Initiatoremulsion eine sehr gleichmäßige Verteilung des Initiators in den Monomertröpfchen erzielt die zu einer signifikanten Reduzierung der Polymerstippenbildung führt.
Der Aktivsauerstoffgehalt in der Initiatoremulsion liegt unterhalb des Bereiches, der laut BGV B4 vom 1. Oktober 1993 als Gefahrbereich für den Umgang festgelegt ist, wobei jedoch der in der Emulsion enthaltene Aktivsauerstoffgehalt ausreicht, um die Polymerisationsreaktion (Homo- oder Copolymerisation) kontrolliert zu ermöglichen.

Die Begrenzung des Aktivsauerstoffgehaltes in der Emulsion auf einen Bereich, der eine Gefährdung beim Umgang deutlich reduziert, wird durch die Zusammensetzung (Ausgangsrezeptur) der Initiatoremulsion erreicht. Insbesondere das Verhältnis von wässriger zu organischer Phase, sowie der Zusatz des verwendeten Emulgators (Stabilisators) / der Emulgatoren (Stabilisatoren) erlaubt die Initiatorsynthese aus dessen Vorstufen und den direkten Einsatz der erhaltenen Emulsion in die Polymerreaktion, ohne das Erreichen kritischer Konzentrationen an Aktivsauerstoff.

Das Verhältnis der organischen Phase (Peroxyverbindung + Träger) zur wässrigen Phase der Initiatoremulsion liegt zwischen 1:10 bis 1:0,8, bevorzugt zwischen 1:5 und 1:1.

Die Art und Menge des Emulgators bzw. Schutzkolloids richtet sich nach der einzustellenden Tröpfchengröße der resultierenden Emulsion und der angestrebten Emulsionsstabilität. Dem Fachmann sind die genauen Bedingungen in den einzelnen Verfahren durch einfache Versuche zugänglich.

Die erfindungsgemäß hergestellte Initiatoremulsion ist lagerstabil, wird aber üblicherweise unmittelbar nach der Herstellung in die Polymerisation eingesetzt.

Als Monomere kommen zum Einsatz z.B. Vinylchlorid, Styrol, Butadien, Acrylnitril, Acryl-und Methacrylsäureester, Ethylen sowie ein Gemisch der genannten Verbindungen. Die Art und Menge der eingesetzten Peroxyverbindung ergibt sich aus der Zerfallsgeschwindigkeit der Peroxyverbindung und der Reaktivität der resultierenden Radikale zu den Monomeren.

### Beispiel 1

In diesem Beispiel wird die Herstellung einer wässrigen Di-(2-ethylhexyl)peroxydicarbonat-Dioctyladipat-Emulsion in einem der Polymerisation vorgeschalteten Reaktor und deren unmittelbarer Einsatz für die Herstellung eines schlagzähgemachten PVC beschrieben.

### 1.1 a Synthese der Di-(2-ethylhexyl)peroxydicarbonat-Emulsion mit Dioctyladipat (DOA) als organischen Träger

In einem 50 L Reaktor, ausgerüstet mit einem Impeller-Rührer, einem Ultra-Turrax-Dispergator, einer Dosierpumpe und Mantelkühlung, werden 4420 g VE-Wasser, 15864 g einer wässrigen 6 %igen Polyvinylalkohollösung (Hydrolysegrad 69 - 72 mol %) und 95 g Sorbitanmonolaurat vorgelegt und auf 8°C gekühlt.

Zu dieser Lösung gibt man unter Rühren nacheinander 2263 g (11,74 mol) 2-Ethylhexylchlorformiat und 565 g (5,82 mol) einer 35 %igen Wasserstoffperoxidlösung.

Mittels der Pumpe dosiert man anschließend 2325 g (11,63 mol) einer 20 %igen Natriumhydroxidlösung mit einer solchen Geschwindigkeit, dass die Reaktorinnentemperatur bei 8 - 10°C konstant bleibt.

Anschließend fügt man der Reaktionsmischung 2240 g (6,04 mol) Dioctyladipat hinzu und dispergiert über den Ultra-Turrax-Dispergator. Die Temperatur der Initiatoremulsion sollte dabei 10 °C nicht überschreiten.

In der erhaltenen Initiatoremulsion wird die Aktivsauerstoffkonzentration iodometrisch bestimmt. Der Aktivsauerstoffgehalt liegt zwischen 0,30 - 0,32 %.

Die für die Reaktion benötigte Menge Initiatoremulsion wird mittels Stickstoff direkt in den Polymerisationsreaktor überführt.

### 1.1 b Synthese einer wässrigen Di-(2-ethylhexyl)peroxydicarbonat-Emulsion ohne die Verwendung eines organischen Trägers

Die Synthese erfolgte analog 1.1 a jedoch wurde kein Dioctyladipat als organischer Träger eingesetzt.

### 1.2 a Synthese des schlagzähmodifizierten PVC über Suspensionspolymerisation mit der in 1.1 a hergestellten Initiatoremulsion

Ein 15 m³-Reaktor mit Impellerrührer und Mantelkühlung wird unter Stickstoffatmosphäre mit 5500 kg VE-Wasser, 4554 kg Vinylchlorid, 13,6 kg Polivinylalkohol (Hydrolysegrad 69 - 72 mol %) und mit 23 kg der in 1.1 a beschriebenen Initiatoremulsion befüllt. In der Aufheizphase auf 61 °C wird im Schuß 1592 kg PBA-Latex (30 % Festoffgehalt) zugegeben.

Die Polymerisation ist nach Druckabfall und einer 1 stündigen Nachpolymerisation beendet, und der Reaktor wird entgast. Die PVC-Dispersion wird über einen Dekanter entwässert und in einem Fließbetttrockner bei 65 °C getrocknet. Es wurden folgende Werte für das PVC-Pulver bestimmt:
- K-Wert:: 65
- Acrylatgehalt:: 10,8 Gew.-%
- Siebanalyse:: Anteil < 63µm: 4 %
Anteil > 200 µm: 1 %
- Schüttdichte:: 588 g·L⁻¹
- Restfeuchte:: 0,1 Gew.-%
- Weichmacheraufnahme:: 7 g/100 g
- Farbwerte:: L:93,9; a: -0,16; b: 1,37 (DIN 6174)
- Stippigkeit:¹⁾: sehr gut

| | | | | |
|---|---|---|---|---|
| **Stippenzahl pro dm²:** | 1-5 | 5-10 | 10-15 | 15-20 |
| **Stippigkeit:** | sehr gut | gut | schlecht | sehr schlecht |

¹⁾ Für die Bestimmung der Stippigkeit wurde der Leuchs-Test verwendet (Leuchs O., Kunststoffe 50 (1960) 227-234.). Über die Anzahl der ausgezählten Stippen pro Fläche wurden den Proben Prädikate zugewiesen (siehe Tabelle 1).

### 1.2 b Synthese des schlagzähmodifizierten PVC über Suspensionspolymerisation mit der in 1.1 b hergestellten Initiatoremulsion

Die Synthese und Aufarbeitung erfolgte analog 1.2 a jedoch wurde hier die unter 1.1 b beschriebene Initiatoremulsion (gleiche Aktivsauerstoffkonzentration pro eingesetztes Monomer) eingesetzt.
Es wurden folgende Werte für das PVC-Pulver bestimmt:
- K-Wert:: 65
- Acrylatgehalt:: 10,7 Gew.-%
- Siebanalyse:: Anteil < 63 µm: 11 %
Anteil > 200 µm: 13 %
- Schüttdichte:: 585 g·L⁻¹
- Restfeuchte:: 0,1 Gew.-%
- Weichmacheraufnahme:: 6,9 g/100 g
- Farbwerte:: L:90,2; a: 0,8; b: 4,5 (DIN 6174)
- Stippigkeit:¹⁾: schlecht
¹⁾ Für die Bestimmung der Stippigkeit wurde der Leuchs-Test verwendet (Leuchs O., Kunststoffe 50 (1960) 227-234.). Über die Anzahl der ausgezählten Stippen pro Fläche wurden den Proben Prädikate zugewiesen (siehe Tabelle 1).

### Beispiel 2

In diesem Beispiel wird die Herstellung einer wässrigen Di-(2-ethylhexyl)peroxydicarbonat-Dioctylphthalat-Emulsion und deren unmittelbarer Einsatz für die Herstellung eines PVC im Suspensionsverfahren beschrieben.

### 2.1 a Synthese der Di-(2-ethylhexyl)peroxydicarbonat-Emulsion mit Dioctylphthalat (DOP) als organischen Träger

In einem 50 L Reaktor mit Impeller-Rührer, Ultra-Turrax-Dispergator, Dosierpumpe und Mantelkühlung, werden 5304 g VE-Wasser, 19037 g einer wässrigen 6 %igen Polyvinylalkohollösung (Hydrolysegrad 69 -72 mol %) und 114 g Sorbitanmonolaurat vorgelegt und auf 8°C gekühlt.
Zu dieser Lösung gibt man unter Rühren nacheinander 2716 g (14,09 mol) 2-Ethylhexylchlorformiat und 678 g (6,98 mol) einer 35 %igen Wasserstoffperoxidlösung.

Mittels der Pumpe dosiert man anschließend 2790 g (13,96 mol) einer 20 %igen Natriumhydroxidlösung mit einer solchen Geschwindigkeit, dass die Reaktorinnentemperatur konstant bei 8°C bleibt.

Anschließend fügt man der Reaktionsmischung 2688 g (6,88 mol) Dioctylphthalat hinzu und dispergiert über den Ultra-Turrax-Dispergator. Die Temperatur der Emulsion sollte dabei 10 °C nicht überschreiten.

In der erhaltenen Initiatoremulsion wird der Aktivsauerstoffgehalt iodometrisch bestimmt. Der Aktivsauerstoffgehalt liegt zwischen 0,30 - 0,32 %.

Die für die Reaktion benötigte Menge Initiatoremulsion wird mittels Stickstoff in den Polymerisationsreaktor überführt.

### 2.1 b Synthese der Di-(2-ethylhexyl)peroxydicarbonat-Emulsion ohne den Einsatz eines organischen Trägers

Die Synthese erfolgte analog 2.1 a jedoch wurde kein Dioctyalphthalat als organischer Träger eingesetzt.

### 2.2 a PVC-Synthese über Suspensionspolymerisation mit der in 2.1 a hergestellten Initiatoremulsion

Ein 15 m³-Reaktor mit Impellerrührer und Mantelkühlung wird unter Stickstoffatmosphäre mit 5600 kg VE-Wasser, 4915 kg Vinylchlorid, 6,0 kg Polivinylalkohol (Hydrolysegrad 69 - 72 mol %) und mit 33 kg der in 2.1 a beschriebenen Initiatoremulsion, befüllt. Der Reaktor wird dann unter Rühren auf 60 °C erwärmt.

Nach Druckabfall und einer 1 stündigen Nachpolymerisation gilt die Polymerisation als beendet und man entfernt die Restmonomere. Die PVC-Dispersion wird über einen Dekanter entwässert und im Fließbetttrockner bei 65 °C getrocknet.

Folgende Daten wurden für das PVC-Pulver bestimmt:
- K-Wert:: 65
- Siebanalyse:: Anteil<63µm: 4 %
Anteil > 250 µm: 6 %
- Schüttdichte:: 551 g·L⁻¹
- Restfeuchte:: 0,2 Gew.-%
- Weichmacheraufnahme:: 25 g/100 g
- Farbwerte:: L:95,8; a: -0,05; b: 1,39 (DIN 6174)
- Stippigkeit:¹⁾: sehr gut
¹⁾ Für die Bestimmung der Stippigkeit wurde der Leuchs-Test verwendet (Leuchs O., Kunststoffe 50 (1960) 227-234.). Über die Anzahl der ausgezählten Stippen pro Fläche wurden den Proben Prädikate zugewiesen (siehe Tabelle 1).

### 2.2 b PVC-Synthese über Suspensionspolymerisation mit der in 2.1 b hergestellten Initiatoremulsion

Die Synthese und Aufarbeitung erfolgte analog 2.2 a jedoch wurde hier die unter 2.1 b beschriebene Initiatoremulsion (gleiche Aktivsauerstoffkonzentration pro eingesetztes Monomer) eingesetzt.

Folgende Daten wurden für das PVC-Pulver bestimmt:
- K-Wert:: 65
- Siebanalyse:: Anteil < 63µm: 12 %
Anteil > 250 µm: 16 %
- Schüttdichte:: 560 g·L⁻¹
- Restfeuchte:: 0,1 Gew.%
- Weichmacheraufnahme:: 26 g/100 g
- Farbwerte:: L:90,2; a: 0,61; b: 5,1 (DIN 6174)
- Stippigkeit: ¹⁾: schlecht
¹⁾ Für die Bestimmung der Stippigkeit wurde der Leuchs-Test verwendet (Leuchs O., Kunststoffe 50 (1960) 227-234.). Über die Anzahl der ausgezählten Stippen pro Fläche wurden den Proben Prädikate zugewiesen (siehe Tabelle 1).

### Beispiel 3

In diesem Beispiel wird die Herstellung einer wässrigen Di-(2-ethylhexyl)peroxydicarbonat-Dioctyladipat-Emulsion in einem der Polymerisation vorgeschalteten Reaktor und deren unmittelbarer Einsatz für die Mikro-Suspensionspolymerisation von Vinylchlorid beschrieben.

### 3.1 Synthese der Di-(2-ethylhexyl)peroxydicarbonat-Emulsion mit Dioctyladipat (DOA) als organischen Träger

Es werden 465 g eines C₁₆ - C₁₈ Fettalkohols und 3097 g einer 15 %igen wässrigen Natriumalkylbenzolsulfonatlösung in 17575 g VE-Wasser bei 65°C gelöst.

Dieses Emulgatorgemisch wird in einen 50 L Reaktor mit Impeller-Rührer, Ultra-Turrax-Dispergator, Dosierpumpe und Mantelkühlung überführt und auf 8°C gekühlt.

Anschließend gibt man zu dieser Lösung unter Rühren nacheinander 2346 g (12,18 mol) 2-Ethylhexylchlorformiat und 586 g (6,03 mol) einer 35 %igen Wasserstoffperoxidlösung.

Mittels der Pumpe dosiert man 2411 g (12,06 mol) einer 20 %igen Natriumhydroxidlösung mit einer solchen Geschwindigkeit, dass die Reaktorinnentemperatur bei 8 °C konstant bleibt.

Danach fügt man der Reaktionsmischung 2323 g (6,27 mol) Dioctyladipat hinzu und dispergiert über den Ultra-Turrax-Dispergator. Die Temperatur der Emulsion sollte dabei 10 °C nicht überschreiten.

In der erhaltenen Initiatoremulsion wird der Aktivsauerstoffgehalt iodometrisch bestimmt. Die Aktivsauerstoffkonzentration liegt zwischen 0,30 - 0,32 %.

### 3.2 PVC-Synthese über Mikrosuspensions-Verfahren mit der in 3.1 hergestellten Initiatoremulsion

Ein 15 m³-Reaktor mit Rührer und Mantelkühlung wird unter Stickstoffatmosphäre mit 3400 kg VE-Wasser, 5460 kg Vinylchlorid, 1100 kg einer jeweils 5 %igen wässrigen Lösung eines C₁₆ - C₁₈ Fettalkohols und Natriumalkylbenzolsulfonats, 1,92 kg Dilauroylperoxid und 26.5 kg der in 3.1 beschriebenen Initiatoremulsion befüllt.
Diese Vorlage wird über einen zweistufigen Hochdruckhomogenisator (1. Stufe 160 bar, 2. Stufe 30 bar) in einen 16 m³-Reaktor mit Rührer und Mantelkühlung überführt.
Der 16 m³-Reaktor wird auf die Polymerisationstemperatur von 52 °C geheizt.

Die Polymerisation ist nach Druckabfall und einer 1 stündigen Nachpolymerisation beendet und der Reaktor wird entgast.

Die PVC-Dispersion wird mittels Sprühtrocknung aufgearbeitet.

Folgende Daten wurden für das PVC-Pulver bestimmt:
K-Wert: 70
Siebanalyse:

| |
|---|
| Anteil > 63µm: ≤ 0.3 % |
| Anteil > 250 µm: ≤ 150 ppm |

Restfeuchte: 0,2 Gew.-%
Farbwerte: L:94,3; a: 0,09; b: 1,28 (DIN 6174)

### Beispiel 4

In diesem Beispiel wird die Herstellung einer wässrigen Di-(isobutoryl)peroxid-Dioctyladipat-Emulsion in einem der Polymerisation vorgeschalteten Reaktor und deren unmittelbarer Einsatz für die Herstellung eines schlagzähgemachten PVC beschrieben.

### 4.1 Synthese der Di-(isobutoryl)peroxid-Emulsion mit DOA als organischen Träger

In einem 1 L Reaktor mit Impeller-Rührer, Ultra-Turrax-Dispergator, Dosierpumpe und Mantelkühlung, werden 36 g VE-Wasser, 199,9 g einer wässrigen 6 %igen Polyvinylalkohollösung (Hydrolysegrad 69 -72 mol %) und 1,2 g Sorbitanmonolaurat vorgelegt und auf 8°C gekühlt.
Zu dieser Vorlage dosiert man zeitgleich unter Rühren und Kühlung 14,4 g (0,135 mol) Isobuttersäurechlorid gelöst in 28,23 (0,076 mol) DOA, 26,5 g (0,135 mol) einer 20 %ige Natronlauge und 6,43 g (0,067mol) einer 35 %igen Wasserstoffperoxidlösung.
Die Reaktorinnentemperatur wird dabei konstant bei 8 - 10°C gehalten. Anschließend dispergiert man über den Ultra-Turrax-Rührer.

In der erhaltenen Initiatoremulsion wird der Aktivsauerstoffgehalt iodometrisch bestimmt. Der Aktivsauerstoffgehalt liegt zwischen 0,25 - 0,27 %.

Die für die Reaktion benötigte Menge Initiatoremulsion wird mittels Stickstoff in den Polymerisationsreaktor überführt.

### 4.2 Synthese des schlagzähmodifizierten PVC über Suspensionspolymerisation mit der in 4.1 hergestellten Initiatoremulsion

Ein 10 dm³-Reaktor mit Impellerrührer und Mantelkühlung wird unter Stickstoffatmosphäre mit 2714 g VE-Wasser, 2387 g Vinylchlorid, 6,3 g Polivinylalkohol (Hydrolysegrad 69 - 72 mol %) und mit 46 g der in 4.1 beschriebenen Initiatoremulsion befüllt. In der Aufheizphase auf 61 °C wird im Schuß 750 g PBA-Latex (30 % Festoffgehalt) zugegeben.

Die Polymerisation ist nach Druckabfall und einer 1 stündigen Nachpolymerisation beendet, und der Reaktor wird entgast. Die PVC-Dispersion wird über einen Dekanter entwässert und in einem Fließbetttrockner bei 65 °C getrocknet. Es wurden folgende Werte für das PVC-Pulver bestimmt:
- K-Wert:: 65
- Acrylatgehalt:: 11,2 Gew.-%
- Siebanalyse:: Anteil < 63µm: 1,6 %
Anteil > 200 µm: 8,2 %
- Schüttdichte:: 527 g·L⁻¹
- Restfeuchte:: 0,1 Gew.%
- Weichmacheraufnahme:: 5,1 g/100 g
- Farbwerte:: L:92,8; a: 0,13; b: 2,37 (DIN 6174)
- Stippigkeit: ¹⁾: sehr gut
¹⁾ Für die Bestimmung der Stippigkeit wurde der Leuchs-Test verwendet (Leuchs O., Kunststoffe 50 (1960) 227-234.). Über die Anzahl der ausgezählten Stippen pro Fläche wurden den Proben Prädikate zugewiesen (siehe Tabelle 1).

## Patentansprüche

1. Verfahren zur Polymerisation oder Copolymerisation von Monomeren in wässriger Suspension oder Mikrosuspension mit Hilfe eines Polymerisationsinitiators, wobei der Initiator als feinteilige wässrige Emulsion des Initiators unmittelbar vor der Polymerisation in einem Eintopfverfahren ("on site") hergestellt wird, und wobei der Initiatoremulsion eine hochsiedende, für die Polymerisation inerte, und mit dem Polymer verträgliche organischen Verbindung (ein Träger) zugesetzt ist, **dadurch gekennzeichnet, dass** der Aktivsauerstoffgehalt der Initiatoremulsion < 0.5 Gew.-% ist und dass der mittlere, volumenbezogene Tröpfchendurchmesser der Initiatoremulsion ≤ 20 µm ist.

2. Verfahren gemäß Anspruch 1, **dadurch gekennzeichnet, dass** der Initiator durch die Reaktion von Wasserstoffperoxid mit einem Alkylchlorformiat oder einem Acylhalogenid oder durch Reaktion eines Acylhalogenids mit einem Hydroperoxid im alkalischen pH-Bereich hergestellt wird.

3. Verfahren gemäß Anspruch 1 oder 2, **dadurch gekennzeichnet, dass** die Initiatoremulsion durch mechanische Feindispergierung nach der Initiatorsynthese erhalten wird.

4. Verfahren gemäß einem der Ansprüche 1 bis 3, **dadurch gekennzeichnet, dass** der in der Polymerisation eingesetzte Initiator ein Dialkylperoxydicarbonat, Perester, Acylperoxid, oder ein Gemisch dieser Perverbindungen ist.

5. Verfahren gemäß einem der Ansprüche 1 bis 4, **dadurch gekennzeichnet, dass** der Initiator in Form einer mit Polyvinylalkohol, Celluloseether oder Polyvinylpyrrolidon sterisch stabilisierten Emulsion eingesetzt wird.

6. Verfahren gemäß einem der Ansprüche 1 bis 4, **dadurch gekennzeichnet, dass** der Initiator in Form einer mit ionischen oder nichtionischen Emulgatoren stabilisierten Emulsion eingesetzt wird.

7. Verfahren gemäß einem der Ansprüche 1 bis 6, **dadurch gekennzeichnet, dass** das Verhältnis der organischen Phase zur wässrigen Phase der Initiatoremulsion zwischen 1:10 bis 1:0,8, bevorzugt zwischen 1:5 und 1:1 liegt.

8. Verfahren gemäß einem der Ansprüche 1 bis 7, **dadurch gekennzeichnet, dass** der wasserunlösliche organische Träger ein Diester eines C₄ - C₁₂-Alkanols mit einer Dicarbonsäure, ein Ester eines C₄ - C₁₂-Alkanols mit einer Monocarbonsäure, oder ein Mineralöl ist.

9. Verfahren gemäß einem der Ansprüche 1 bis 8, **dadurch gekennzeichnet, dass** der mittlere, volumenbezogene Tröpfchendurchmesser der Initiatoremulsion ≤ 10µm, bevorzugt ≤ 5 µm ist.

10. Verfahren gemäß einem der Ansprüche 1 bis 9, **dadurch gekennzeichnet, dass** der Initiator ausgewählt ist aus der Gruppe Alkylperoxydicarbonat, dessen Alkylreste 2 bis 20 C-Atome enthält, welches durch Reaktion eines Alkylhalogenformiats mit Wasserstoffperoxid im pH-Bereich von 8 - 12 hergestellt wird; Diacylperoxid, dessen Acylrest 4 bis 20 C-Atome enthält, welches durch Reaktion eines entsprechenden Acylhalogenids mit Wasserstoffperoxid im pH-Bereich 8 - 12 hergestellt wird; und Alkyl-, Cycloalkyl-, Aryl- oder Alkylaryl-Perester, wobei der Peracylrest 4 bis 20 C-Atome enthält, welches durch Umsetzung eines entsprechenden Acylhalogenids mit einem Hydroperoxid im pH-Bereich 8-12 hergestellt wird; oder ein Gemisch aus den genannten Verbindungen.

11. Zusammensetzung, enthaltend einen Initiator zur Homo- oder Copolymerisation von Monomeren, ausgewählt aus der Gruppe Alkylperoxydicarbonat, dessen Alkylreste 2 bis 20 C-Atome enthält, welches durch Reaktion eines Alkylhalogenformiats mit Wasserstoff- oder Alkaliperoxid im pH-Bereich von 8-12 hergestellt wird; Diacylperoxid, dessen Acylrest 4 bis 20 C-Atome enthält, welches durch Reaktion eines entsprechenden Acylhalogenids mit Wasserstoff- oder Alkaliperoxid im pH-Bereich 8 - 12 hergestellt wird; und Alkyl-, Cycloalkyl-, Aryl- oder Alkylaryl-Perester, wobei der Peracylrest 4 bis 20 C-Atome enthält, welches durch Umsetzung eines entsprechenden Acylhalogenids mit einem Hydroperoxid im pH-Bereich 8 - 12 hergestellt wird, oder ein Gemisch aus den genannten Verbindungen in Form einer Emulsion, wobei der Initiatoremulsion eine hochsiedende, für die Polymerisation inerte, und mit dem Polymer verträgliche organischen Verbindung (ein Träger) zugesetzt ist, **dadurch gekennzeichnet, dass** der Aktivsauerstoffgehalt der Initiatoremulsion < 0.5 Gew.-% ist und dass der mittlere, volumenbezogene Tröpfchendurchmesser der Initiatoremulsion ≤ 20 µm ist.

12. Zusammensetzung gemäß Anspruch 11, **dadurch gekennzeichnet, dass** sie außerdem wenigstens einen Stabilisator aus der Gruppe Polyvinylalkohol, Celluloseether, Polyvinylpyrrolidon, oder ionische oder nichtionische Emulgatoren enthält.

13. Verwendung einer Zusammensetzung gemäß Anspruch 11 oder 12 als Initiatoremulsion in einer Polymerisationsreaktion.

14. Verfahren gemäß einem der Ansprüche 1 bis 10, Zusammensetzung gemäß einem der Ansprüche 11 oder 12 oder Verwendung gemäß Anspruch 13, **dadurch gekennzeichnet, dass** die in die Polymerisationsreaktion eingesetzten Monomere ausgewählt sind aus Vinylchlorid, Styrol, Butadien, Acrylnitril, Acryl- und Methacrylsäureester, Ethylen, oder Gemischen daraus.

## Claims

1. Method for the polymerisation or copolymerisation of monomers in an aqueous suspension or microsuspension by means of a polymerisation initiator, the initiator being produced as a fine-grained aqueous emulsion of said initiator in a one-pot method (on site) immediately before polymerisation, and an organic compound (a carrier), which has a high boiling point, is inert to polymerisation and is compatible with the polymer, being added to the initiator emulsion, **characterised in that** the active oxygen content of the initiator emulsion is < 0.5 % by weight, and **in that** the average volumetric droplet diameter of the initiator emulsion is ≤ 20 µm.

2. Method according to claim 1, **characterised in that** the initiator is produced by reacting hydrogen peroxide with an alkyl chloroformate or an acyl halide or by reacting an acyl halide with a hydroperoxide in the alkaline pH range.

3. Method according to either claim 1 or claim 2, **characterised in that** the initiator emulsion is obtained by mechanical fine dispersion after the synthesis of the initiator.

4. Method according to any one of claims 1 to 3, **characterised in that** the initiator which is used in the polymerisation is a dialkyl peroxydicarbonate, perester, acyl peroxide or a mixture of these per-compounds.

5. Method according to any one of claims 1 to 4, **characterised in that** the initiator is used in the form of an emulsion stearically stabilised with polyvinyl alcohol, cellulose ether or polyvinyl pyrrolidone.

6. Method according to any one of claims 1 to 4, **characterised in that** the initiator is used in the form of an emulsion stabilised with ionic or anionic emulsifiers.

7. Method according to any one of claims 1 to 6, **characterised in that** the ratio of the organic phase to the aqueous phase of the initiator emulsion is between 1:10 and 1:0.8, preferably between 1:5 and 1:1.

8. Method according to any one of claims 1 to 7, **characterised in that** the water-insoluble organic carrier is a diester of a C₄-C₁₂ alkanol with a dicarboxylic acid, an ester of a C₄-C₁₂ alkanol with a monocarboxylic acid, or a mineral oil.

9. Method according to any one of claims 1 to 8, **characterised in that** the average volumetric droplet diameter of the initiator emulsion is ≤ 10 µm, preferably ≤ 5 µm.

10. Method according to any one of claims 1 to 9, **characterised in that** the initiator is selected from the group containing alkyl peroxydicarbonate, of which the alkyl radical contains 2 to 20 carbon atoms and which is produced by reacting an alkyl haloformate with hydrogen peroxide in the pH range of 8 to 12; diacyl peroxide, of which the acyl radical contains 4 to 20 carbon atoms and which is produced by reacting an appropriate acyl halide with hydrogen peroxide in the pH range of 8 to 12; and alkyl, cycloalkyl, aryl or alkylaryl perester, the peracyl radical containing 4 to 20 carbon atoms, said perester being produced by reaction an appropriate acyl halide with a hydroperoxide in the pH range of 8 to 12; or a mixture of said compounds.

11. Composition, containing an initiator for homopolymerisation or copolymerisation of monomers, selected from the group containing alkyl peroxydicarbonate, of which the alkyl radical contains 2 to 20 carbon atoms and which is produced by reacting an alkyl haloformate with hydrogen peroxide or alkaline peroxide in the pH range of 8 to 12; diacyl peroxide, of which the acyl radical contains 4 to 20 carbon atoms and which is produced by reacting an appropriate acyl halide with hydrogen peroxide or alkaline peroxide in the pH range of 8 to 12; and alkyl, cycloalkyl, aryl or alkylaryl perester, the peracyl radical containing 4 to 20 carbon atoms, said perester being produced by reaction of an appropriate acyl halide with a hydroperoxide in the pH range of 8 to 12, or a mixture of said compounds in the form of an emulsion, an organic compound (a carrier), which has a high boiling point, is inert to polymerisation and is compatible with the polymer, being added to the initiator emulsion, **characterised in that** the active oxygen content of the initiator emulsion is < 0.5 % by weight, and **in that** the average volumetric droplet diameter of the initiator emulsion is ≤ 20 µm.

12. Composition according to claim 11, **characterised in that** it further contains at least one stabilising agent from the group containing polyvinyl alcohol, cellulose ether, polyvinyl pyrrolidone, or ionic or anionic emulsifiers.

13. Use of a composition according to either claim 11 or claim 12 as an initiator emulsion in a polymerisation reaction.

14. Method according to any one of claims 1 to 10, composition according to either claim 11 or claim 12, or use according to claim 13, **characterised in that** the monomers used in the polymerisation reaction are selected from vinyl chloride, styrene, butadiene, acrylonitrile, acryl and methyl acid ester, ethylene, and mixtures thereof.

## Revendications

1. Procédé de polymérisation ou de copolymérisation de monomères en suspension ou microsuspension aqueuse à l'aide d'un initiateur de polymérisation, dans lequel l'initiateur est préparé sous forme d'émulsion aqueuse d'initiateur finement répartie immédiatement avant la polymérisation dans un procédé en un pot (« sur site ») et l'émulsion d'initiateur est additionnée d'un composé organique (un véhicule) à point d'ébullition élevé, compatible avec le polymère et inerte pour la polymérisation, **caractérisé en ce que** la teneur en oxygène actif de l'émulsion d'initiateur est < 0,5 % en poids et que le diamètre moyen des gouttelettes de l'émulsion d'initiateur, rapporté au volume, est ≤ 20 µm.

2. Procédé selon la revendication 1, **caractérisé en ce que** l'initiateur est préparé par la réaction du peroxyde d'hydrogène avec un chloroformiate d'alkyle ou un halogénure d'acyle ou par la réaction d'un halogénure d'acyle avec un hydroperoxyde dans la zone de pH alcalin.

3. Procédé selon la revendication 1 ou 2, **caractérisé en ce que** l'émulsion d'initiateur est obtenue par fine dispersion mécanique après la synthèse de l'initiateur.

4. Procédé selon l'une des revendications 1 à 3, **caractérisé en ce que** l'initiateur mis en oeuvre dans la polymérisation est un peroxydicarbonate de dialkyle, perester, peroxyde d'acyle, ou un mélange de ces percomposés.

5. Procédé selon l'une des revendications 1 à 4, **caractérisé en ce que** l'initiateur est ajouté sous la forme d'une émulsion à stabilisation stérique par un alcool polyvinylique, un éther de cellulose ou la polyvinyl-pyrrolidone.

6. Procédé selon l'une des revendications 1 à 4, **caractérisé en ce que** l'initiateur est mis en oeuvre sous la forme d'une émulsion stabilisée par des émulsifiants ioniques ou non ioniques.

7. Procédé selon l'une des revendications 1 à 6, **caractérisé en ce que** le rapport entre la phase organique et la phase aqueuse de l'émulsion d'initiateur se situe entre 1/10 et 1/0,8, de préférence entre 1/5 et 1/1.

8. Procédé selon l'une des revendications 1 à 7, **caractérisé en ce que** le véhicule organique insoluble dans l'eau est un diester d'un alcanol en C₄ à C₁₂ avec un acide dicarboxylique, un ester d'un alcanol en C₄ à C₁₂ avec un acide monocarboxylique ou une huile minérale.

9. Procédé selon l'une des revendications 1 à 8, **caractérisé en ce que** le diamètre moyen des gouttelettes de l'émulsion d'initiateur, rapporté au volume, est ≤ 10 µm, de préférence ≤ 5 µm.

10. Procédé selon l'une des revendications 1 à 9, **caractérisé en ce que** l'initiateur est choisi dans le groupe constitué par le peroxydicarbonate d'alkyle dont les radicaux alkyles comprennent de 2 à 20 atomes de C, qui est préparé par réaction d'un halogénoformiate d'alkyle avec le peroxyde d'hydrogène dans la plage de pH de 8 à 12 ; le peroxyde de diacyle, dont le radical acyle comprend de 4 à 20 atomes de C, qui est préparé par réaction d'un halogénure d'acyle correspondant avec le peroxyde d'hydrogène dans la plage de pH de 8 à 12 ; et les peresters d'alkyle, de cycloalkyle, d'aryle ou d'alkylaryle, où le radical peracyle comprend de 4 à 20 atomes de C, qui est préparé par réaction d'un halogénure d'acyle correspondant avec un hydroperoxyde dans la plage de pH de 8 à 12 ; ou un mélange des composés cités.

11. Composition, contenant un initiateur pour l'homo- ou la copolymérisation de monomères, choisi dans le groupe constitué par le peroxydicarbonate d'alkyle dont les radicaux alkyles comprennent de 2 à 20 atomes de C, qui est préparé par réaction d'un halogénoformiate d'alkyle avec le peroxyde d'hydrogène ou un peroxyde alcalin dans la plage de pH de 8 à 12 ; le peroxyde de diacyle, dont le radical acyle comprend de 4 à 20 atomes de C, qui est préparé par réaction d'un halogénure d'acyle correspondant avec le peroxyde d'hydrogène ou un peroxyde alcalin dans la plage de pH de 8 à 12 ; et les peresters d'alkyle, de cycloalkyle, d'aryle ou d'alkylaryle, où le radical peracyle comprend de 4 à 20 atomes de C, qui est préparé par réaction d'un halogénure d'acyle correspondant avec un hydroperoxyde dans la plage de pH de 8 à 12 ; ou un mélange des composés cités sous la forme d'une émulsion, dans laquelle l'émulsion d'initiateur est additionnée d'un composé organique (un véhicule) à point d'ébullition élevé, compatible avec le polymère et inerte pour la polymérisation, **caractérisée en ce que** la teneur en oxygène actif de l'émulsion d'initiateur est < 0,5 % en poids et que le diamètre moyen des gouttelettes de l'émulsion d'initiateur, rapporté au volume, est ≤ 20 µm.

12. Composition selon la revendication 11, **caractérisée en ce qu'**elle comprend, d'autre part, au moins un stabilisant provenant du groupe constitué par l'alcool polyvinylique, l'éther de cellulose, la polyvinylpyrolidone ou des émulsifiants ioniques ou non ioniques.

13. Utilisation d'une composition selon la revendication 11 ou 12 à titre d'émulsion d'initiateur dans une réaction de polymérisation.

14. Procédé selon l'une des revendications 1 à 10, composition selon l'une des revendications 11 ou 12 ou utilisation selon la revendication 13, **caractérisés en ce que** les monomères mis en oeuvre dans la réaction de polymérisation sont choisis parmi le chlorure de vinyle, le styrène, le butadiène, l'acrylonitrile, les esters d'acide acrylique et méthacrylique, l'éthylène ou leurs mélanges.
